# EUROPEAN PATENT SPECIFICATION

(11) **EP 4 039 893 B1**
(45) Date of publication and mention of the grant of the patent: **01.01.2025**
(21) Application number: 22154161.8
(22) Date of filing: 31.01.2022
(51) Int. Cl.: E03B 7/08

(54) **METHOD FOR SAFE FLUSHING OF PIPES OF WATER SUPPLY NETWORK AND MOBILE DEVICE FOR SAFE FLUSHING OF PIPES OF WATER SUPPLY NETWORK**
VERFAHREN ZUM SICHEREN SPÜLEN VON LEITUNGEN EINES WASSERVERSORGUNGSNETZES UND MOBILE VORRICHTUNG ZUM SICHEREN SPÜLEN VON LEITUNGEN EINES WASSERVERSORGUNGSNETZES
PROCÉDÉ DE RINÇAGE SÉCURISÉ DE TUYAUX DE RÉSEAU D'ALIMENTATION EN EAU ET DISPOSITIF MOBILE PERMETTANT D'ASSURER UN RINÇAGE SÉCURISÉ DE TUYAUX DE RÉSEAU D'ALIMENTATION EN EAU

(30) Priority: 02.02.2021 CZ 20210047
(43) Date of publication of application: 10.08.2022
(73) Proprietor: Vysoké ucení technické v Brne, 60190 Brno (CZ)
(72) Inventor: Rajnochová, Markéta, 73955 Smilovice (CZ); Suchácek, Tomás, 76601 Valasské Klobouky (CZ); Rucka, Jan, 66434 Kurim (CZ)
(74) Representative: Sedlák, Jirí

(56) References cited:
- CA-C- 2 822 237
- US-A1- 2005 067 015
- US-A1- 2019 317 533

## Description

### Field of the Invention

The invention relates to a method of and to a mobile device for safe flushing of pipes of a water supply network for removing fine unconsolidated sediments, accumulated debris from the pipes, or for changing water in less frequented sections of pipes of the water supply network.

### Background of the Invention

Currently, water network operators are flushing water network pipes with the help of technical staff and hand tools. The technician goes to a fire hydrant that is fitted on a selected section of the water pipe network and attaches a discharge hose to the hydrant via a hydrant fire extension to divert the discharged water away from the hydrant. He then opens the hydrant with a handheld hydrant wrench and leaves the hydrant open so that the water flows out of the pipe. The discharge of water continues for an unspecified period of time according to established practice. After a sufficient period of time has passed (from the technician's perspective), the technician closes the hydrant, disconnects the hose from the hydrant, and moves to another location in the water supply network to the next fire hydrant according to the work plan. The technician's work plan is based on the time elapsed since the last flushing of that section of the water pipe network, or on complaints from drinking water consumers about poor quality of the water.

The disadvantages of the above procedure are that during such a flushing process, water is wasted significantly, which is a serious problem in the current drinking water shortage, there is also a high risk of resuspendation of fine sediments in the surrounding water supply network, or hydraulic shock (also water hammer) may occur in the pipeline, which may cause pipeline failure, or active corrosion of the pipeline may start due to too high shear stress on the inner walls of the pipeline at too high flushing velocity. Therefore, manual flushing of pipes generates significant risks that threaten the quality of drinking water in the network and the safety of the drinking water supply. The sources of these risks are human factors (inaccuracy, laziness), inadequate instrumentation of the operating technicians (absence of measurements during flushing procedure) and incorrect methodological procedures (absence of a precise flushing procedure for each flushing point).

The method of flushing the pipes of the water supply network, which would save flushing water in the first place, is solved in the Czech patent CZ 308 414 (B6). The invention deals with how to schedule only the necessary flushing of a water supply network to ensure its legally required quality with the smallest possible volume of water discharged during flushing. During flushing, technicians flush only the less frequent, usually end branches of the water network where water is stagnant, based on empirically collected data on the operation and water quality of these less frequent pipes in the water supply network. The method used predicts the future development of individual water quality indicators in each individual pipe section in the future, taking into account the current values of these indicators, the values of selected hydraulic variables, soil temperature, air temperature, time of day and other parameters.

Simply put, the invention according to its method creates a scenario for future flushing of individual sections of the water supply network according to the real quality of water of the water supply network, thereby saving drinking water by leaving out flushing of pipes where the water quality is in accordance with the requirements of the applicable legislative regulations. This known invention does not address the risks arising from manual flushing by a water network engineer, since the flushing is carried out by stationary equipment, still simply by releasing water from the pipes. Based on the scenario for flushing the water network pipe sections, a more precise flushing schedule for the water network pipe sections is established for the technician, but the actual execution of the flushing remains the same.

There is a known invention that can replace the work of the technician himself. It is a hydrant with the possibility of automatically implemented flushing according to the invention of the document US 10 011 978 (B1). The hydrant is installed below ground level and is provided with means for remotely controlled flushing.

The disadvantages of the invention are that it does not address the risks associated with flushing and cannot respond to dynamically changing hydraulic conditions in the water supply network, or to changes in the quality of the water flowing out of the pipe. The variable that the invention measures is time, which results in a flushing operation that is as risky and inefficient as that of a technician who manually opens a hydrant and closes it after a period of time has elapsed. Furthermore, it is disadvantageous from a construction point of view that a substantial part of the equipment has to be placed in the armature shaft below ground level, which increases the initial investment costs, including the maintenance costs of the shaft associated with the equipment. Last but not least, it is disadvantageous that in the event of a non-standard situation the technician can react adequately and not start the upcoming flushing at all, or not terminate the failed flushing prematurely, or at least inform the water company's dispatcher in time. Conversely, the time-controlled device according to the invention does not take the non-standard situation into account and causes a discoloration event, an undesirable drop in pressure or other undesirable situation in the water supply network. This is its fundamental deficiency, in that it cannot adequately react to the actual hydraulic conditions in the water supply network, or the actual quality of the drinking water in the pipeline, and adapt the course of implementation of controlled flushing of a given pipeline section to these circumstances.

The problems associated with flushing the water supply network are also dealt with by the invention of an automatic flushing system according to document AU 2017/232180 (A1). The system is controlled, in essence, as a computer network, wherein there is at least one control server which has stored data on the topology of the water supply network, wherein the server has stored various scenarios for flushing sections of pipes of the water supply network, and wherein at the same time automatic hydrants are remotely connected to the server, the status of which can be controlled by the server.

The disadvantages of the above invention are that it is extremely investment-intensive and requires very precise estimation of the locations where permanent stationary flushing fittings will be installed already at the design stage of the water supply network. This reasoning is entirely theoretical and cannot be applied in practice. A particular example is given for illustration. The water supply system of a small town that supplies drinking water to 2 000 inhabitants may have a water network length estimated at about 6 to 8 km. On such a network there will have to be, depending on the experience of flushing the pipes, about 15 to 32 of these stationary flushing devices. This number can easily be estimated from the average length of the flushed section. Each flushing system according to document AU 2017/232180 (A1) will need to be built (investment), service its electronics, regulary renew, examine and service its machinery and, in particular, deal with its faults as i tis already a relative complex system. Without having to quantify these costs precisely, it is obvious that it is many times cheaper to use one compact mobile device according to the invention described in the following section for this purpose and to transport it to the flushing site by car just when the section needs to be flushed, which in the worst cases (very old corroded pipe sections) is, according to experience, no more than 4 times a year, but usually once every two years.

A mobile device for flushing of portions of water systems by hydrants attached in the system is known in US2005067015A. This device comprises a controller programmed to a desired start and stop time, and to a desired cycle time.

A method of flushing a pipe section is disclosed e.g. in US2019317533A. This method uses a pressure sensor for defining the status of a flushing valve but also for definition of a pressure difference in the flushing valve and the supply mains.

The object of the invention is to provide a method of flushing the pipes of a water supply network and a mobile device for flushing the pipes of the water supply network, which would effectively perform the main task of flushing a given section of a water network pipe with only a minimum volume of drinking water, that can respond to non-standard situations such as hydraulic shock, discoloration in the water network or active corrosion on the walls of the water pipes, and that can be used on existing water networks without the need for major construction investments.

### Summary of the Invention

This object is achieved by a method and by a mobile device for safe flushing of pipes of a water supply network according to the invention described below.

As part of the implementation of the method of safe flushing of pipes of water supply network, water is discharged from at least one selected pipe section to flush unwanted fine unconsolidated sediments from the pipe. The method includes the publicly known procedure steps: b) the instantaneous pressure in the pipe of the selected pipe section is measured before the water discharge begins, and c) the flushing plan is updated according to the measured instantaneous value of the water pressure in the pipe and the permissible water pressure limits, which are further supplemented by innovative steps a), d) and e).

The subject-matter of the invention consists in that the method comprises the following process steps:
a the permissible limits of water pressure in the pipelines shall be recorded for the selected pipeline section of the water supply network according to the actual or expected technical specification, and a flushing plan with a curve of the planned flow rate of the flushed water from the moment of the start of flushing to the moment of the end of flushing,

This is important because the forthcoming flushing must be adapted to the design capabilities of the pipe section in order to avoid damage to the pipe, and at the same time it is necessary to know the flow rate of the flushing water, which must have sufficient entrainment capacity to flush fine unconsolidated particles from the pipe throughout the flushing. At the same time, however, it is not desirable to induce a too high flow velocity in the pipe which would disturb the structures on the pipe walls. At the same time, it is necessary to ensure that the volume of water used to flush a section of pipe is as small as possible so that water is not wasted.
b) the instantaneous pressure in the pipe of the selected pipe section is measured before the water discharge begins,

This step is important to ensure that the pressure limits are not exceeded with the start of the flushing, which would result, for example, to the resuspendation of fine unconsolidated sediments elsewhere in the water supply network, or to a drop in pressure in other downstream pipe sections of the water network below the lowest safe value. In addition, information on the difference between the instantaneous pressure in the pipeline prior to the start of the controlled flushing and the allowable pressure limits allows the flushing of a given section to be scheduled to minimise the volume of water used to flush that section, as discussed below.

c) the flushing plan is updated according to the measured instantaneous value of the water pressure in the pipe and the permissible limits of the water pressure in the pipe. This means that the water flow to be discharged in each step of the entire flushing procedure is recalculated. At the same time, the duration of the flushing is also updated.

The advantage of this procedure step is that the flushing process can be used to schedule the discharge water flow so that the instantaneous hydrodynamic pressure in the pipeline section is as close as possible to the lower pressure limit of the pipeline section, thereby mobilizing the fine unconsolidated sediments in the pipeline more efficiently with a smaller volume of discharge water. Thus, the higher hydrodynamic water pressure in the pipeline at the beginning of the controlled flushing is purposely used here as a potential for more efficient flushing and water conservation. However, care is always taken at the same time to ensure that the maximum permissible flow velocities in the pipe section are not exceeded or that hydraulic shock is not created, as discussed in the following section.

d) the discharge of water shall be initiated, with the discharge flow measured and regulated for compliance with the flushing plan, and the continuous measurement of water pressure in the pipeline shall be initiated simultaneously,

This step should always be carried out, as if the instantaneous pressure is deliberately brought close to the pressure limits in the pipeline section during the flushing process to maximise the flushing effect, the potential risk of exceeding the pressure limits in the pipeline increases at the same time.

e) during flushing, the instantaneous water pressure in the pipeline is continuously compared to the permissible pressure limits, and when a trend of change in instantaneous pressure values outside the set limits is detected, the flow of water discharged outside the flushing plan is regulated to protect the pipeline from damage by exceeding the set pressure limits.

As soon as a trend is noted that the instantaneous pressure should exceed the pressure limits of the pipeline, measures must be initiated to control the flow of the discharged water to prevent this from happening, regardless of what stage the flushing of the pipeline section is at.

Preferably, the individual parameters of the flushing plan for the pipeline section are recalculated in real time according to the instantaneous pressure values and the current phase of the flushing process, after which the flushing of the pipeline section is safely completed.

It is necessary to take into account whether the fluctuation of the water pressure in the pipeline outside the specified pressure limits is caused, for example, by a sudden withdrawal of water from the water supply network, which does not prevent the completion of the flushing, it is sufficient to adapt it to this change in the state of the water supply network. If, however, the change in the instantaneous pressure condition is caused, for example, by an obstruction (e.g. a piece of wood from the pipe or a stone) blocking the opening under the flushing control valve, it is necessary to start opening the control valve in stages immediately so that the blocked object is released as soon as possible and a hydraulic shock is avoided.

Advantageously, in step c), at least one additional parameter from the group of information on synchronised flushing of at least one other selected pipe section of the same water network, information on water temperature in the selected pipe section, information on water quality in the selected pipe section, is used to update the flushing plan. It is a known fact that water changes its density with changing temperature, which may affect the efficiency of resuspension of fine unconsolidated sediments in the pipe, therefore it is advisable to take this into account to achieve minimum water consumption for flushing the pipe. Other known parameters can advantageously refine the flushing plan.

In a preferred embodiment of the method according to the invention, step d) measures the instantaneous value of the pressure in the pipe with a frequency in the range of tens of Hz, while step e) measures the instantaneous value of the pressure in the pipe with a frequency in the range of units of kHz. Sampling at tens of samples per second is sufficient to detect a change in the tendency of the instantaneous pressure outside the specified limits, however, once the change in the tendency of the instantaneous pressure is detected, thousands of pressure measurements per second are required, since the change in fluid pressure and the associated hydraulic shock is an almost instantaneous phenomenon and therefore needs to be measured quickly enough to deploy appropriate flow control countermeasures.

It is also advantageous if, as part of process step b), the entire flushing is postponed if the measured water pressure limits in the water supply network are exceeded. This is important, for example, when a larger amount of water is currently being withdrawn elsewhere in the water network contrary to expectations, causing a temporary lack of hydraulic capacity in the water network. The implementation of controlled flushing in this situation could lead to an undesirable drop in hydraulic pressure in large parts of the water supply network, with negative consequences for the safety of the drinking water supply, the quality of the water and the quality of the service provided to drinking water consumers.

The invention also comprises a mobile device for safe flushing of pipes of a water supply network according to independent claim 6.

The mobile device includes components for performing a safe flushing of a pipeline section according to the method according to the invention. The water level in the pipe is measured, evaluated, and the flow rate is regulated accordingly by controlling an electrically controlled gate valve. At the same time, the device is mobile due to the box arrangement, thus it can be used anywhere where the topology of the water supply network extends and where a water hydrant is located.

In a preferred embodiment of the mobile device, the stilling pipe is provided with an outlet for connecting a tapping pipe provided with a tap and at least one electric 2. meter for measuring a physical or quality parameter of the water. The technician operating the device can take water samples, for example for later laboratory tests.

The preferred electrical meters for physical or quality parameters of water include meters from group comprising a thermometer or a turbidity meter. These electronic meters collect data relevant for safe flushing and for the proper operation of the water supply network. It is advantageous if the measuring means of an electric meter for a physical or water quality parameter lies outside the main cross-section of the water flow pipe. If an object of larger dimensions, such as a stone, is carried in the water flow, the measuring means of the gauges will not be affected and damaged.

If the electrically operated gate valve has a controllable rate of change of water flow through it, this provides additional possibilities for modelling the flushing plan, as the faster the flow through the gate valve can be controlled, the more dramatic pressure changes can be operated. It is advantageous if the electronic control unit is equipped with a communication interface for wireless communication with a remote server or other mobile device for safe flushing of the water network pipes or with external electronics. The remote server will provide information on the flushing schedule, or communication from multiple mobile devices will allow synchronization of flushing to increase the effect on the water supply network. Also, the mobile device can communicate with external devices such as control tablets, or water network meters. For easier setup of the mobile device, the electronic control unit is equipped with a locator for determining the exact map position. Knowing the exact location will make it easier to enter information about the pipeline section.

Preferably, the mobile box comprises a rigid frame with fairing and wheels, with the control means and inlet and outlet flanges with transitions extending outside the fairing. The components that the technician has to operate are outside the box. While everything else is stored under the fairing for the protection of the technician and mobile equipment.

A preferred embodiment of the mobile device includes a power supply comprising at least one 12 V battery. A 12 V battery power supply is considered safe from a human health perspective if an electrical discharge occurs.

It is also advantageous if the control means comprises a display and at least one button. The display conveys essential information to the technician and the technician can control the mobile device using the buttons.

Advantages of the invention include optimization of the initial and final stages of pipeline flushing procedure with prevention of hydraulic shock in the flushed pipeline and the ability to eliminate unexpected hydraulic shock due to blockage of the pipeline by a larger object. The mobile device is equipped with a pressure sensor and a flowmeter that can detect the onset of hydraulic shock in the pipeline based on very fast measurement and evaluation of pressure and flow changes over time. Both variables are measured inside the mobile device in normal flushing mode at a frequency of 10 times per second, then when a surge is detected the measurement frequency is automatically increased to 1000 times per second.

The internal circuitry of the mobile device is designed to prevent the shock from occurring, or to detect its onset very quickly (less than 1 second) and prevent its further propagation and amplification. This is achieved by rapid detection of pressure and flow and subsequent corresponding rapid response of the shut-off gate valve. The opening and closing of the gate valve is continuous and the mobile device ensures that, during the flushing, the pressure in the pipe does not exceed the pre-set safe nominal pressure in the pipe (P_{N}), for which the pipe is marginally rated. The faster the gate valve closes; the higher hydraulic shock is generated. If the water flow is closed very quickly, a so-called "total hydraulic shock" is created. This gives rise to a very interesting possibility for optimising the upward or downward movement of the gate valve, which the mobile device has.

The mobile device can optimise the opening and closing speed of the gate valve to make the most of the difference between the hydrostatic pressure in the pipe and the nominal pressure of the pipe, and open or close the gate valve in the shortest possible time to save time and flushing water.

For example, if a pipeline with a nominal pipeline pressure of P_{N}10 (10 bar) is to be flushed and the static pressure in the pipeline is 1 bar, then 9 bar is available for the pressure increment due to the hydraulic shock created by the mobile device and therefore the gate valve can be manipulated (opened and closed) relatively quickly, thus saving flushing water. However, if the static pressure in the same P_{N}10 pipe was 9 bar, then only 1 bar is available for the increment due to the shock and must be handled very carefully so that the maximum allowable pressure in the pipe is not exceeded by the high shock created.

This optimization cannot be done manually due to the high demands on the measurement frequency and sensitivity of the intervention, but the mobile device can do this. The control gate valve is controlled in steps, flow and pressure are continuously measured. In the event that a shock occurs, the mobile device is equipped with a 10 bar safety valve that releases the pressure until the mobile device can reduce it by manipulating the gate valve.

There are three situations in which a hydraulic shock occurs in a pipeline during flushing.
(1) When opening the pipeline at the start of the flushing, which is solved by slow opening in steps of the gate valve and simultaneously measuring the pressure change. When a shock occurs above the allowable limit, the opening steps are slowed or stopped and the pressures and flows are allowed to settle for a period longer than the length of the shock wave amplitude. This value is determined by the machine itself by calculation from the knowledge of the distance to the nearest pressure stable point and the knowledge of the pipe material.
(2) During closing the pipe after flushing - as mentioned above.
(3) If the pipe is unexpectedly blocked by an object. This situation is the worst because it is unexpected and occurs at full water velocity. When flushing a pipe, it often happens that larger objects (stones, wood) that have entered the pipe during previous repairs and pipe failures are knocked out of the pipe by the water flow. Unexpected pressure surges can occur when such objects are set in motion by the flowing water during flushing, pass through the hydrant and become wedged at high velocity inside the flushing mobile device under the open gate valve. In response to this event, the mobile device is equipped with an automated instruction and will attempt to release the blocked object through appropriate manipulation of the gate valve by opening the gate valve and increasing the space for the object to exit the pipe under the gate valve. As the gate valve is raised, pressure and flow are continuously measured and changes in both are evaluated. Once the blocked object has been released, the machine again tries to return to the original gate valve position as quickly as possible to avoid exceeding the flow rate of the water in the pipe and wasting water.

In terms of seriousness, the greatest risk is the impact according to point 3), then according to point 2) and the least risk is generated by the impact according to point 1). The system invented in the context of the invention for preventing hydraulic shock can be considered much safer than manual manipulation of caps on pipelines, where the pressure is not measured at all and the operating engineer is guided only by his estimation. This feature is essential to the operation of the invention and the safety of the flushing process. At the same time, a significant saving of flushing water is achieved by reducing the post-flushing closure phase to the shortest possible time.

### Brief description of the drawings

The invention will be explained in more detail in the following drawings, where:
- Figure 1: shows a block diagram of a mobile device for safe flushing,

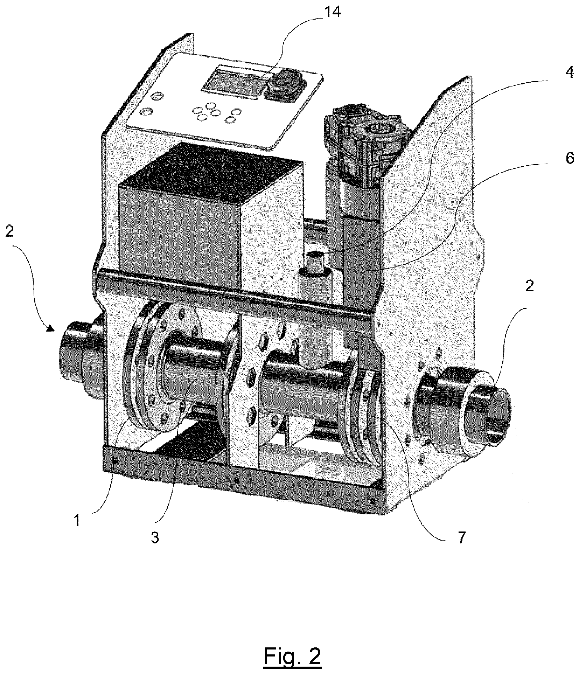

- Figure 2: shows a model of the mobile device with the fairing removed,

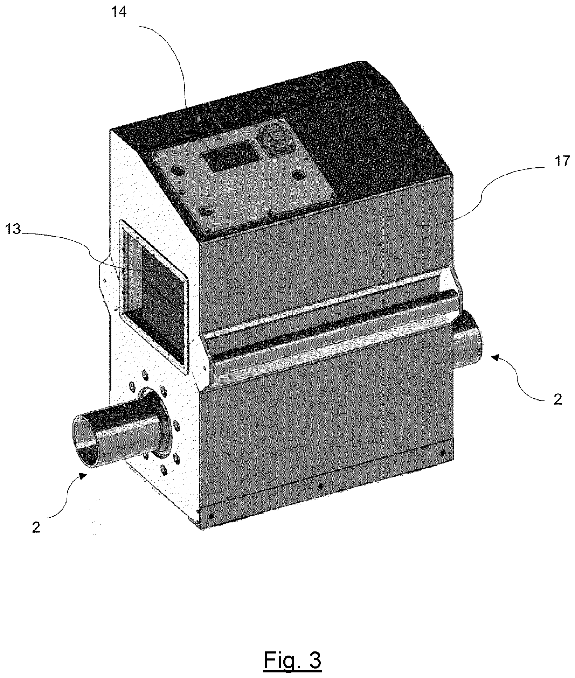

- Figure 3: shows a model of a mobile device with fairing.

### Examples of the Preferred Embodiments of the Invention

It is understood that the specific embodiments of the invention described and illustrated below are presented for purposes of illustration only and not as a limitation of the invention to the examples provided. Those skilled in the art will find or be able to provide, using routine experimentation, a greater or lesser number of equivalents to the specific embodiments of the invention described herein.

The goal of pipe flushing is to safely, completely and efficiently remove fine, unconsolidated sediments from the water pipes that distribute drinking water. Once an exemplary mobile flushing device has been fitted to the selected water hydrant, the operator starts the device by pressing the button **15** on the control panel, and the entire process can then be fully computer controlled without the need of human intervention. The flushing is then carried out on the basis of a flushing plan, i.e. precise instructions.

The flushing plan is therefore a precise set of instructions that must first be created using a hydraulic model of the water supply network in question and prepared for the mobile device.

This instruction for flushing a specific pipe section is found by the mobile device itself in the database according to the GPS coordinate where it is located or the location information is communicated to it by the operator. After the entire flushing procedure is completed, the operator dismantles the mobile device and moves it to the next hydrant.

During the flushing procedure, the operator can monitor selected measured variables and monitored indicators of the ongoing flushing, as well as the impact of the ongoing flushing on the rest of the water supply network. It is also possible, if necessary, to remove the computer control of the flushing and to control the flushing completely manually, or to use partial computer support in the control (so-called semi-automatic mode).

The invention according to the example also enables coordinated cooperation of several flushing mobile devices simultaneously, which can be advantageously applied, for example, for flushing water pipes of larger dimensions, where it is necessary, with respect to achieving the desired water flow rate of the pipe during flushing, to discharge water from several hydrants simultaneously in a coordinated manner.

The mobile device according to the example is fully portable, its weight is 75 kg. It is a mechanical-electronic- device mounted in a rigid metal frame with wheels **16.** The device is covered with a fairing **17,** battery-powered, portable and ready for fully mobile operation in the field and transport in a car. For loading into the car, there is an anchor eye above the centre of gravity of the mobile device for attaching the tie rope of the loading crane.

The flow rate from the hydrant to the example mobile device is rated at 40 l/s, which is quite sufficient as the hydrant has a maximum flow capacity of 37 l/s.

The electronics of this exemplary mobile device can run on a 12 V **13** battery. The capacity of the battery **13** is chosen to supply the device with energy for the entire working day.

The trolley's rigid frame and fairing **17** construction ensures resistance to shock, wet and dust. The exemplary mobile device is designed for car transport, splashing water, dirt, off-road operation, and meets the IP68 standard.

This embodiment of the mobile device can be operated by the operator via a tablet while he can sit in the car and control the whole flushing procedure. In addition, the tablet also records data from the flushing process (time, location, pressure and flow rate over time).

An exemplary mobile device allows real-time monitoring of the pressure drop in the surrounding water supply network during flushing. Data from predefined pressure gauges on the water supply network are loaded into the tablet and the mobile device can control the flushing so that the instantaneous reality does not exceed the given value from the given gauge. For example, the mobile device may be instructed that the flow rate must not exceed a set value at a given location somewhere else in the network, or that the pressure must not drop below a set value at a given location somewhere else in the network. All this is reflected in the flushing schedule.

Measurement of variables prior to the start of flushing is carried out as a safety measure for safe start of flushing - before the start of flushing the mobile device measures the pressure value in the water supply network, the turbidity value and the water temperature value. It stores these data in memory and further operates with them as follows: if the pressure value in the water supply network is outside the predefined pressure range that should occur at a given place and time, the flushing is not started. If the pressure in the pipeline is lower than expected (the expected pressure is the result of the preparation of the flushing plan using a hydraulic simulation model of the water supply network, it is determined in advance with an accuracy of plus/minus 0.01 MPa what the lowest possible operating pressure in each individual hydrant in the water supply network should be), then there is a high probability that there is a large water withdrawal from the water supply network somewhere else in the network, e.g. a fire hydrant, or a pump is not working, or a section of pipe that should be open is closed, etc. Clearly, the pressure in the pipe is not at the normal value, significantly below the lowest normally occurring pressure value, indicating that there is some anomalous phenomenon in the water network where it is not safe to initiate flushing, or the water network is in a different configuration than anticipated when the flushing plan was prepared. In such a case, the mobile device shall warn the operator and prompt him to resolve the problem. The automatic flushing mode will not be enabled. If, on the other hand, the pressure in the pipe is higher than the highest theoretically possible pressure in the pipe, the mobile device shall prompt the operator to pause for 5 minutes and then repeat the measurement. This is done twice more. If the situation is not resolved and the pressure does not drop, then the mobile device proceeds identically to the previous case.

The mobile device allows three modes of flushing control - fully automatic mode, semi-automatic mode, manual mode.

The fully automatic mode is used for repeated flushing, when the site is being flushed for a second time and the results of previous flushing are used. The mobile device retrieves the specific flushing instruction for the given section from the database (pressure, flow, volume, time) and performs the flushing completely autonomously. It then closes itself, signals the operator and switches off. It is then moved to the next location.

The semi-automatic mode is used when partial manual flushing of a section is required when, for whatever reason, full flushing instructions are not available. In such a case, the mobile device is instructed (either via tablet or display **14**) to discharge e.g. 15 m³ of water and to open the gate valve **6** only so that the pressure at points P1, P2 and P3 (where pressure gauges are fitted in hydrants with data transmission to the server) does not fall below the pressure values p1, p2 and p3, or to achieve a flow rate of e.g. 15,0 1·s⁻¹ and hold it for e.g. 12 minutes.

The fully manual control mode manually opens/closes the electrical gates **6** inside the machine using the display **14** buttons **15** while the operator monitors the measured quantities (pressure, flow, turbidity, volume, temperature, conductivity).

The mobile device is equipped with a GPS chip, so it recognizes its own location and searches the database for the hydrant it is probably on (tolerance 3 m - length of the connection hose). From the database, it then retrieves the instruction to flush the specific pipe section and sets itself up. It is important to note that sometimes two or three different sections are flushed from one hydrant and each section has its own, different, flushing procedure. In this case, the operator is asked which section will be flushed. This is an important safety feature that eliminates human error during flushing. The mobile device will not allow an incorrect flushing instruction to be retrieved by mistake and will not then allow automatic flushing with faulty instructions. In the event of a mismatch, or failure to find the correct flushing instruction for a given GPS coordinate, the automatic mode will not start and a full manual flushing mode must be used.

When flushing large pipe sizes (larger than DN150), multiple hydrants must be opened simultaneously in a coordinated manner. Each hydrant is therefore equipped with a mobile device that automatically reads its flushing instruction. One of the mobile devices has the function of "master" and, if it receives a "ready" signal from the other mobile devices, it will start the flushing and control it to completion. The other mobile devices obey it, as it is intended that there will be no operator present. They transmit their data and status variables wirelessly to the "master".

It is also possible to use the existing stationary flushing valves patented under the patent Method and system for optimizing the quality of drinking water, Czech Patent No. 308414, for joint synchronized flushing, where the mode for cooperation in controlled flushing is activated for this case, as if the valves were additional mobile devices according to the present invention.

If necessary, the invention can also incorporate one or two manually operated flushing points into a common flushing procedure, where the mobile device is told in advance the location of the manual flushing, the time at which the flushing will start and the flow rate to be discharged from the hydrant at that location. The mobile device will then take this manu al flushing into account and consider its effect on the flushing.

In the case of semi-automatic flushing mode, the mobile device has a set of basic setting rules (table values for individual materials and pipe dimensions) that ensure safe flushing even in the absence of a basic flushing plan and specific instructions for a given pipe section. This function is applicable, for example, when it is known that a DN80 cast iron pipe 60 years old is to be flushed and it is necessary to act efficiently and safely. It is necessary to achieve a flushing velocity that reliably flushes out sand grains of e.g. 2 mm, but at the same time not to set the water flow rate too high so that active corrosion is not caused by too high shear stress on the pipe walls. Therefore, it is essential to select the optimum flushing flow for the profile and thus derive the optimum flushing velocities in the pipe. In the semi-automatic control mode, the mobile device will recommend to the operator the optimum flow rate and flushing velocity in response to the specified profile and pipe material to be flushed.

All mechanical parts of the instrument are ready for electronic control. The flushing water inlet outlets are formed by standard firefighter's bayonet caps.

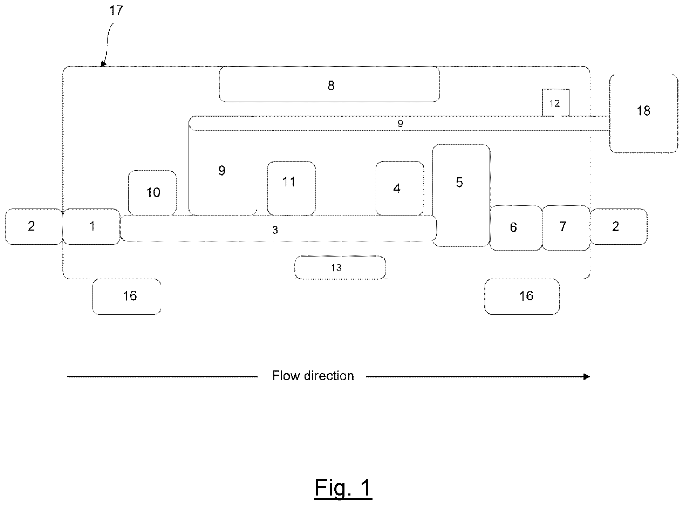

Figure 1 shows a block diagram of a mobile device. From the left side, water from the water hydrant enters the mobile device trolley through the bayonet B75 acting as a transition **2,** which is reduced to the inlet flange **1** with DN80 thread. The latter is welded to the stilling pipe **3,** which also serves to connect the electronic meters. Pressure and temperature are measured here.

There is also a tapping pipe **9** for external water supply. This is forked outdoors and it is possible to connect an external turbidity meter or a tap **18.** Just before the flow meter **5** there is a safety valve **4** for 10 bar, which protects the mobile device against too high pressure from the water supply (e.g. shock). Behind the stilling pipe **3** is an electronic flow meter **5** followed by a gate valve **6** which is electrically operated, and finally the DN80 outlet flange **7,** which is connected to the B75 bayonet connection for the fire hose on the outside of the device via the transition **2.** The mobile device trolley contains an insulated box with electronics, called the electronic control unit **8,** which controls the operation of the entire device. The advantage is a large display **14** which shows in real time the current indicators of the ongoing flushing. There is also a 12V battery **13** which ensures continuous operation of the device throughout the day.

The trolley is covered with a bent sheet metal and stands on rubber wheels **16.** It has handles on the sides so it is easy to move around in the field.

The control unit **8** of the mobile device is operated by a monochrome, backlit graphic display **14** with a resolution of 240x128 pixels and a diagonal of 4.5", the advantage of which is excellent readability even in the sun, as well as a real-time circuit or RTC, to keep the clock even in the off state, as well as GPS for accurate positioning and date and time updates, as well as an SD card slot, for recording the measured values, a loudspeaker that provides an audio response during the operation of the device, touch buttons **15** for navigating through the menu and setting the device, a proximity sensor to activate the control, a light sensor to adjust the backlight of the display **14,** several mechanical buttons **15** to turn the device on and off, stop the flushing, etc. , then a motor driver to control the actuator of the gate valve **6,** and then logic to power the instrument.

External peripherals can also be part of the mobile device, which are placed in the trolley and run through a cable to the control unit **8.** These include means for controlling the actuator of the gate valve **6** and means for informing about its opening/closing, as well as an electric flow meter **5,** as well as an electric pressure sensor, called a pressure gauge **10,** as well as a temperature sensor, called a thermometer **11,** as well as a battery **13** and means for external power supply, as well as a technical preparation for the installation of the turbidity meter **12.**

The control panel is easily accessible to the operator and can be used to control all the functionality of the device. The front control panel is dominated by a 4.5" display **14,** with six touch buttons **15** below, mechanical buttons **15** on the sides, an SD card slot and a software update connector. The control unit **8** has more inputs and outputs than are used in the example configuration. This is due to the possible expansion of the functions of the mobile device in the future. The list of external inputs and outputs of the control unit **8** is: 12x input (pushbutton, pulse), 4x open collector type output (e.g. for LEDs), 2x voltage input 0-10 V, 2x current loop 0-20 mA, 2x current loop 0-20 mA - fast (secondary MCU), 1x input for temperature sensor PT1000.

Mobile devices are normally powered by a battery **13,** but it is possible to connect an external power supply that can also power the device. The 12 V input from the car cigarette lighter was chosen as the external power supply. In a mobile device it is therefore necessary to distinguish the type of power supply to be used. The advantage is that it is not necessary to use a voltage converter, because the voltage from the battery **13** is also 12 V.

It may seem logical to a person skilled in the art to recharge the battery **13** when an external power supply is connected, but experiments have shown that there are several problems that make it not worthwhile to implement this charging. The biggest problem is the motor consumption when the gate valve **6** moves. This consumption is usually between 5 and 10 A, and charging the battery **13** with an additional 5 A while doing so could cause significant problems with a power requirement that is already at the edge of what the car charger is designed to do. Other problems arise from the low voltage for charging and the need for additional electronics to do higher voltages than 12 V, as the battery **13** is charged at voltages higher than 12 V.

The whole device is controlled by software running on the control unit **8.** It communicates with all peripherals and executes defined commands on this basis. The writing language is modified C and C++. The software is written in object-oriented manner and divided into 3 levels: drivers, adapters, main loop.

Drivers are libraries that take care of communication with peripherals. These libraries are mostly developed by the community and are freely downloadable. For example, a driver can be a library that communicates with a real-time circuit (RTC) located on the printed circuit board of the control unit **8** in the form of a chip. Or a library communicating with the RTC inside the control unit **8.**

It is usually necessary to prepare a certain superstructure above the driver. This can be an extension of functionality with some specific functions or a connection of several controllers, which then look like one. An example would be an adapter that connects an RTC chip located on the circuit board and an RTC inside the control unit **8.** The external RTC keeps time when the device is switched off, when switched on the control unit **8** records this time and continues to use its clock (for speed reasons). The main program loop then does not have to decide which RTC it wants to access; it simply asks for the time and gets it from one adapter. The adapter takes care of updating and communicating between the two peripherals in the background.

The main loop connects the adapters and possibly the drivers into a single unit. The result is one clear application that can be easily extended with additional functionality. All processes in the loop are designed as tasks that run at a specific time. It is thus possible to evenly distribute the executed operations among the computing power while executing some operations more frequently than others. For example, reading analog data from sensors needs to be done very frequently, but refreshing the data on the display is only necessary if there is a change.

The basic frame of a mobile device trolley consists of several parts. The lower part is made up of two 40 x 40 L-sections of 4 mm thickness connected by 50 x 4 mm and 90 x 4 mm flat bars. The length of the L-sections 473,4 mm determines the length of the base of the trolley and their spacing 309 mm determines the width of the base of the trolley. Stainless steel 1.4301 was chosen as the material based on the frequent corrosive effects of water and weather. In order to meet the mobility requirement, this base structure was equipped with two pairs of wheels **16,** one pair of static wheels and one pair of swivel wheels **16,** which are also equipped with a brake to lock the trolley in place. In the original design of the prototype, two flat bars of the same dimensions were used in the structure, but due to the large size of the base of the static wheels, **16** an extended flat bar of 90 mm width was used in the next generation of the prototype. The L-profiles and flat bars are connected to each other by fillet welds.

The trolley's load-bearing side rails and the centre strut are attached to the lower frame using holes in the L-sections and perpendicular couplings. These parts serve as the load-bearing part for the entire piping system and, due to the way the load is applied and to reduce the overall weight, a 6 mm thick 3.1645 (EN AW-2007) material was chosen, which is protected against weathering by painting. The side rails are connected to the sides of the mobile equipment trolley with sight tubes to increase the rigidity of the whole structure and also serve as side handles for handling the trolley. These tubes are made of stainless steel and therefore without painting. The side rails are also the load-bearing element for the entire trolley fairing **17,** which is made of 1.4401 1 mm thick bent stainless steel sheet. The side rails are fitted with an additional pair of stainless steel handles to facilitate handling of the trolley when the operator is not standing at the sides of the trolley. Two hinged loops are attached to the top of the trolley sides for hanging the entire trolley from a handling arm attached to the loading crane. The side rails are made by waterjet cutting technology. The piping structure consists (in the direction of water flow) of a B75 bayonet mounted by screwing onto a DN 80 inlet threaded flange **1.** This inlet threaded flange **1** is attached by a flanged joint with gasket to a DN 80 pressure relief piece equipped with pressure and temperature sensors, a P _{N}10 pressure safety valve **4** (the entire system is sized according to this pressure) and a tapping pipe **9** and for connecting the turbidity meter **12.** The pressure stilling pipe **3** is connected again by a flanged joint with gasket to the ELA MI-C flow meter **5**. This is followed by the same connection to the electrically operated knife gate valve **6** and again the same connection to the second threaded outlet flange **7** DN 80, on which a second bayonet transition **2** B75 is screwed for the hose connection.

The flange connection consists of two connected parts of the piping system, a rubber gasket with metal insert DN 80 for pressure P_{N}10 and a set of corrosion-resistant (A2) M18 bolts 65 mm or 120 mm long secured with a set of nuts and washers of the same material. The two connections of the stilling pipe **3** are identical, but the connection of the knife gate valve **6** to the other parts of the pipe is different because the spacing of the flanges on both sides of the gate valve **6** is too low. For this reason, a single set of long (120 mm) bolts, washers and nuts are used for the flow meter **5** - gate valve **6** and gate valve **6** - threaded outlet flange **7** connections.

The motor and the gearbox controlling the knight gate valve **6** are designed to be used together and their mounting is therefore straightforward, however, new holes need to be made in the flange for proper mounting to the gate valve **6** flange as the existing holes are not spaced correctly and the gearbox needs to be mounted at an approximate 45° angle for space reasons.

The battery **13** storage compartment is made up of a set of parts cut by waterjet technology from duralumin sheet 3.1645 (EN AW-2007) with thicknesses of 4, 5 and 6 mm. The thickness of the parts varies according to their position in the structure, i.e., the bottom support plate has the largest thickness mentioned, the side plates the middle thickness and the top cover plate the smallest thickness, i.e. 4 mm. This variety was chosen to save weight and in case of problems with material availability or mass production, the thickness can be unified. The mouth of the battery **13** cavity is flanked by a cover frame forming a fitting for the P-shaped gasket which seals the door of the cavity. The door and frame are again made by waterjet cutting from the same material as the other parts of this part of the trolley, the door being 4 mm thick and the frame 2 mm thick.

The parts are assembled together using M3 screws of various lengths made of galvanised steel. The door hinge bolts are made of stainless steel. The screws in the seal frame must be used with countersunk heads to sufficiently press the seal between the door and the sidewall of the mobile equipment trolley. The space in the battery **13** cavity is sized for 2 WP20-I2IE batteries **13** with sufficient space for connectors and fuses.

The control panel with the display **14** and other peripherals are mounted in a panel made of transparent PMMA with a thickness of 5 mm, which is printed on the view side to cover everything except the display part of the display **14.** The panel is made by laser cutting and the touch screen display **14** is recessed from the inside of the panel into a pocket in the panel formed by milling. This pocket is necessary to reduce the distance of the touch screen displey **14** from the outer work surface. There are two holes in the panel for mechanical buttons **15,** mounting holes for attaching the panel to the cover plate and a hole for an SD card reader and a Micro USB connector. The SD card reader and connector are susceptible to weather damage, so a redesigned 230 V socket for external use is used, meeting the IP54 standard. The socket's interior is replaced with a reader and connector mount made using 3D printing technology. On the inside, the electronics are protected by a box fixed to the cover plate from the inside. This covering of the electronics as well as of the batteries **13** is necessary for protection in case of a malfunction or in case of opening of the pressure safety valve **4,** the mouth of which is directed from the inside under the trolley.

### Industrial applicability

The method of safe flushing of pipes of water supply network and a mobile device for safely flushing the pipes of a water supply network according to the invention will find application in the field of maintenance of a drinking water distribution network.

### Overview of relationship tags

- 1: inlet flange
- 2: transition
- 3: stilling pipe
- 4: safety valve
- 5: electric flow meter
- 6: electrically operated gate valves
- 7: outlet flange
- 8: electronic control unit
- 9: tapping pipe
- 10: pressure gauge
- 11: thermometer
- 12: the turbidity meter
- 13: battery
- 14: display
- 15: button
- 16: wheel
- 17: fairing
- 18: tap

## Claims

1. A method of safe flushing of pipes of water supply network, whereby water is drained from at least one selected pipe section to flush out unwanted contents in the pipework wherein the method comprises the following process steps:
a) for the selected pipe section of the water supply network, the permissible limits of water pressure in the pipe are read according to the actual or assumed technical specification, and the flushing plan is read with a curve of the planned flow of discharged water from the moment of the start of flushing to the moment of the end of flushing,
b) the instantaneous pressure in the pipe of the selected pipe section is measured before the water discharge begins,
c) the flushing plan is updated according to the measured instantaneous value of the water pressure in the pipe and the permissible water pressure limits,
d) the discharge of water is initiated, with the discharge flow measured and regulated for compliance with the flushing plan, and the continuous measurement of water pressure in the pipeline shall be initiated simultaneously,
e) during flushing, the instantaneous water pressure in the pipeline is continuously compared with the permissible pressure limits until the end of the flushing, and if a trend of change in instantaneous pressure values outside the set limits is detected, the flow of discharged water outside the flushing plan is regulated to protect the pipeline from damage by exceeding the set limits.

2. The method according to claim 1, **characterised in that,** following step e), in the case of controlling the flow rate of the discharged water as part of a measure against exceeding the permissible pressure limits, the flushing plan is updated in real time in accordance with the restricted flow rate, whereupon the flushing is completed.

3. The method of claim 1 or 2, **characterised in that** following step c), at least one additional parameter from the group consisting of information about synchronised flushing of at least one other selected pipe section of the same water network, water temperature in the selected pipe section, water quality in the selected pipe section, information about the progress and success of previous flushing of the selected pipe section is used to update the flushing plan.

4. The method according to any of claims 1 to 3, **characterised in that** in step d) the instantaneous value of the pressure in the pipe at a frequency in the range of tens of Hz is measured, whereas in step e) the instantaneous value of the pressure in the pipe at a frequency in the range of units of kHz is measured.

5. The method according to any of claims 1 to 4, **characterized in that** in step b) no flushing is initiated when the permissible water pressure limits are exceeded.

6. A mobile device for safe flushing of pipes of a water supply network according to the method according to any of claims 1 to 5 comprising an inlet flange (1) with a transition (2) for connecting a water supply leading from a hydrant of the water supply network, further comprising a stilling pipe (3) connected at one end to the inlet flange (1), further comprising a safety valve (4) arranged at the other end of the stilling pipe (3), and further comprising at least one control means for controlling the operation of the mobile device, **characterized in that** the mobile device further comprises an electrically actuated gate valve (6), at least one electric meter for measuring a physical or quality parameter of water, the at least one electric meter being connected to the stilling pipe (3) and comprising at least one electric pressure gauge 2. (10); further comprising an electric flow meter (5) arranged downstream of the safety valve (4) in the direction of water flow; further comprising an outlet flange (7) with a transition (2) arranged to the electrically actuated gate valve (6) for connecting the water outlet of the mobile device, further comprising an electronic control unit (8), which is wired or wirelessly connected to the at least one electric meter for measuring a physical or quality parameter of water, further to the electric flow meter (5), further to the electrically actuated gate valve (6), and further to a control means, wherein the components of the mobile device are housed in a covered cart for their safety concealment and for transportability of the mobile device, and wherein the electrically actuated gate valve (6) is arranged downstream of the electric flow meter (5) in the direction of water flow, wherein the mobile device is configured to measure water level in the pipe of the selected pipe section, evaluate it and regulate accordingly the flow rate by controlling the electrically actuated gate valve (6).

7. The mobile device according to claim 6, **characterized in that** the stilling pipe (3) is provided with an outlet for connecting a tapping pipe (9) fitted with a tap (18) and the at least one electric 2. meter gauge for measuring a physical or quality parameter of water.

8. A mobile device according to claim 6 or 7, **characterized in that** the at least one electric meter for measuring a physical or quality parameter of water is of the group a thermometer (11) and a turbidity meter (12).

9. The mobile device according to any of claims 6 to 8, **characterized in that** the measuring means of the electrical meter for measuring the physical or quality parameter of the water is placed outside the main cross-section of the tapping pipe (9) of the water flow.

10. A mobile device according to any of the claims 6 to 9, **characterized in that** the electrically operated gate valve (6) has a controllable rate of change of water flow through it.

11. The mobile device according to any of claims 6 to 10, **characterized in that** the electronic control unit (8) is provided with a communication interface for wireless communication with a remote server or other mobile device for synchronised safe flushing of the water network pipes or with external electronics.

12. Mobile device according to any of the claims 6 to 11, **characterized in that** the electronic control unit (8) is provided with a locator for determining an accurate map position.

13. A mobile device according to any of claims 6 to 12, **characterized in that** the trolley comprises a rigid frame with a fairing (17) and wheels (16), wherein the control means and the inlet and outlet flanges (1, 7) project outside the fairing (17).

14. A mobile device according to any of claims 6 to 13, **characterized in that** it comprises a rechargeable power supply comprising at least one battery (13) having a voltage of 12 V.

15. A mobile device according to any one of claims 6 to 14, **characterized in that** the control means comprises a display (14) and at least one button (15).

## Patentansprüche

1. Verfahren zum sicheren Durchspülen von Wasserleitungsrohren, bei dem Wasser aus mindestens einem ausgewählten Leitungsabschnitt abgelassen wird, um unerwünschte Inhalte in der Rohrleitung auszuspülen, **dadurch gekennzeichnet, dass** das Verfahren aus den folgenden Verfahrensschritten besteht:
a) für den ausgewählten Leitungsabschnitt des Wasserversorgungsnetzes werden die zulässigen Grenzen des Wasserdrucks in der Leitung entsprechend der tatsächlichen oder angenommenen technischen Spezifikation geladen und der Spülplan mit einer Kurve des geplanten Durchflusses des abgelassenen Wassers vom Zeitpunkt des Spülbeginns bis zum Zeitpunkt des Spülendes geladen,
b) vor Beginn der Wasserentleerung wird der momentane Druck in der Rohrleitung des ausgewählten Leitungsabschnitts gemessen,
c) entsprechend dem gemessenen Momentanwert des Wasserdrucks in der Leitung und den zulässigen Wasserdruckgrenzen wird der Spülplan aktualisiert,
d) die Wasserentleerung wird eingeleitet, wobei der Durchfluss des abgelassenen Wassers gemessen und auf Übereinstimmung mit dem Spülplan geregelt wird, und gleichzeitig wird die kontinuierliche Messung des Wasserdrucks in der Rohrleitung eingeleitet,
e) während der Spülung wird der momentane Wasserdruck in der Rohrleitung bis zum Ende der Spülung kontinuierlich mit den zulässigen Druckgrenzwerten verglichen, und wenn eine Tendenz der Veränderung der momentanen Druckwerte außerhalb der festgelegten Grenzwerte festgestellt wird, wird der Durchfluss des abgelassenen Wassers außerhalb des Spülplans geregelt, um die Rohrleitung vor Schäden durch Überschreiten der festgelegten Grenzwerte zu schützen.

2. Verfahren nach Anspruch 1, **dadurch gekennzeichnet, dass** im Anschluss an den Verfahrensschritt (e) bei einer Regelung der Durchflussmenge des abgelassenen Wassers im Rahmen einer Maßnahme gegen die Überschreitung der zulässigen Druckgrenzen der Spülplan in Echtzeit entsprechend der gedrosselten Durchflussmenge aktualisiert wird, woraufhin die Spülung abgeschlossen wird.

3. Verfahren nach Anspruch 1 oder 2, **dadurch gekennzeichnet, dass** in Schritt (c) mindestens ein zusätzlicher Parameter aus der Gruppe bestehend aus Informationen über die synchronisierte Spülung mindestens eines anderen ausgewählten Leitungsabschnitts desselben Wassernetzes, der Wassertemperatur in dem ausgewählten Leitungsabschnitt, der Wasserqualität in dem ausgewählten Leitungsabschnitt und Informationen über den Fortschritt und den Erfolg der vorherigen Spülungen des ausgewählten Leitungsabschnitts zur Aktualisierung des Spülplans verwendet wird.

4. Verfahren nach einem der Ansprüche 1 bis 3, **dadurch gekennzeichnet, dass** in Schritt (d) der Momentanwert des Drucks in der Leitung bei einer Frequenz im Bereich von einigen zehn Hz gemessen wird, während in Schritt (e) der Momentanwert des Drucks in der Leitung bei einer Frequenz im Bereich von Einheiten von kHz gemessen wird.

5. Verfahren nach einem der Ansprüche 1 bis 4, **dadurch gekennzeichnet, dass** in Verfahrensschritt (b) keine Wasserspülung eingeleitet wird, wenn die zulässigen Druckgrenzen überschritten werden.

6. Mobile Vorrichtung zum sicheren Durchspülen der Wasserleitungsrohren nach einem der Ansprüche 1 bis 5, umfassend einen Einlassflansch (1) mit einem Übergangsstück (2) zum Anschluss einer von einem Hydranten des Wassernetzes führenden Wasserzufuhr, ferner ein Entlastungsrohr (3), das an einem Ende mit dem Einlassflansch (1) verbunden ist, ferner ein Entlastungsventil (4), das am anderen Ende des Entlastungsrohrs (3) angeordnet ist, und ferner mindestens eine Steuereinrichtung zur Steuerung des Betriebs der mobilen Vorrichtung, **dadurch gekennzeichnet, dass** die mobile Vorrichtung ferner einen elektrisch betätigten Schieber (6), mindestens ein elektrisches Messgerät zur Messung eines physikalischen oder qualitativen Parameters von Wasser umfasst, wobei mindestens ein elektrisches Messgerät mit dem Entlastungsrohr (3) verbunden ist und mindestens ein elektrisches Manometer (10) umfasst, und ferner einen elektrischen Durchflussmesser (5) umfasst, der in Strömungsrichtung des Wassers hinter dem Entlastungsventil (4) angeordnet ist, ferner einen Auslassflansch (7) mit einem Übergangsstück (2) umfasst, der an einem elektrisch betätigten Schieber (6) angeordnet ist, um den Wasserauslass der mobilen Vorrichtung anzuschließen, ferner eine elektronische Steuereinheit (8) umfasst, die drahtgebunden oder drahtlos mit mindestens einem Messgerät zur Messung eines physikalischen oder qualitativen Parameter des Wassers verbunden ist, ferner mit dem elektrischen Durchflussmesser (5), ferner mit dem elektrisch betätigten Schieber (6), ferner mit der Steuereinrichtung, wobei die Komponenten der mobilen Vorrichtung in einem abgedeckten Wagen untergebracht sind, um diese sicher abzudecken und die mobile Vorrichtung transportabel zu machen, und dass der elektrisch betätigte Schieber (6) in Strömungsrichtung des Wassers hinter dem elektrischen Durchflussmesser (5) angeordnet ist, wobei die mobile Vorrichtung so konfiguriert ist, dass sie den Wasserstand in der Leitung des ausgewählten Leitungsabschnitts misst, den Wasserstand auswertet und den Durchfluss durch Steuern des elektrisch betätigten Schiebers (6) entsprechend reguliert.

7. Mobile Vorrichtung nach Anspruch 6, **dadurch gekennzeichnet, dass** das Entlastungsrohr (3) mit einem Auslass zum Anschluss eines mit einem Wasserhahn (18) versehenen Entnahmerohrs (9) und mindestens einem elektrischen Messgerät zur Messung eines physikalischen oder qualitativen Parameters des Wassers versehen ist.

8. Mobile Vorrichtung nach Anspruch 6 oder 7, **dadurch gekennzeichnet, dass** das mindestens eine elektrische Messgerät zur Messung eines physikalischen oder qualitativen Parameters des Wassers aus der Gruppe bestehend aus einem Thermometer (11) und einem Trübungsmessgerät (12) stammt.

9. Mobile Vorrichtung nach einem der Ansprüche 6 bis 8, **dadurch gekennzeichnet, dass** sich die Messeinrichtungen des elektrischen Messgeräts zur Messung des physikalischen oder qualitativen Parameters des Wassers außerhalb des Hauptquerschnitts des Entnahmerohrs (9) für die Wasserströmung befindet.

10. Mobile Vorrichtung nach einem der Ansprüche 6 bis 9, **dadurch gekennzeichnet, dass** der elektrisch betätigte Schieber (6) eine steuerbare Geschwindigkeit der Veränderung des Wasserdurchflusses durch den Schieber aufweist.

11. Mobile Vorrichtung nach einem der Ansprüche 6 bis 10, **dadurch gekennzeichnet, dass** die elektronische Steuereinheit (8) mit einer Kommunikationsschnittstelle zur drahtlosen Kommunikation mit einem entfernten Server oder einem anderen mobilen Gerät zur synchronisierten sicheren Spülung der Wassernetzleitungen oder mit externer Elektronik versehen ist.

12. Mobile Vorrichtung nach einem der Ansprüche 6 bis 11, **dadurch gekennzeichnet, dass** die elektronische Steuereinheit (8) mit einem Ortungsgerät zur Bestimmung einer genauen Kartenposition ausgestattet ist.

13. Mobile Vorrichtung nach einem der Ansprüche 6 bis 12, **dadurch gekennzeichnet, dass** der Wagen einen starren Rahmen mit einer Verkleidung (17) und Rädern (16) umfasst, wobei sich die Steuereinrichtung und die Einlass- und Auslassflansche (1, 7) außerhalb der Verkleidung (17) erstrecken.

14. Mobile Vorrichtung nach einem der Ansprüche 6 bis 13, **dadurch gekennzeichnet, dass** sie eine wiederaufladbare Stromversorgung mit mindestens einem Akku (13) mit einer Spannung von 12 V umfasst.

15. Mobile Vorrichtung nach einem der Ansprüche 6 bis 14, **dadurch gekennzeichnet, dass** die Steuereinrichtung ein Display (14) und mindestens eine Taste (15) umfasst.

## Revendications

1. Méthode de rinçage en toute sécurité des conduits du réseau d'approvisionnement en eau, dans lequel l'eau est évacuée d'au moins une section de conduit sélectionnée afin d'éliminer le contenu indésirable du conduit, **caractérisé en ce qu'**elle consiste en les étapes de procédé suivantes :
a) pour la section de conduit sélectionnée du réseau d'approvisionnement en eau, selon les spécifications techniques réelles ou supposées, les limites de pression d'eau admissibles dans les conduits sont lues et le plan de rinçage est également lu avec la courbe du débit prévu de l'eau évacuée depuis le début du rinçage jusqu'au moment de la fin du rinçage,
b) avant le début de l'évacuation de l'eau, la pression instantanée dans les conduits de la section sélectionnée est mesurée,
c) le plan de rinçage est mis à jour en fonction de la valeur instantanée mesurée de la pression d'eau dans les conduits et selon les limites de pression d'eau admissibles,
d) l'évacuation de l'eau est commencée, le débit d'eau évacuée étant mesuré et régulé pour assurer la conformité au plan de rinçage, et, simultanément, les mesures continues de la pression de l'eau dans les conduits sont commencées,
e) pendant le rinçage, la pression instantanée de l'eau dans les conduits est continuellement comparée aux limites de pression admissibles jusqu'à la fin du rinçage, le débit de l'eau évacuée s'écartant du plan de rinçage étant régulé afin de protéger les conduits contre les dommages causés par le dépassement des limites fixées lorsqu'une tendance au changement des valeurs de pression instantanée en dehors des limites fixées est détectée.

2. Procédé selon la revendication 1, **caractérisé en ce qu'à** la suite de l'étape (e) de procédé, dans le cas d'une régulation du débit de l'eau évacuée dans le cadre de mesures contre le dépassement des limites de pression admissibles, le plan de rinçage est mis à jour en temps réel en fonction du débit restreint, après quoi le rinçage est terminé.

3. Procédé selon la revendication 1 ou 2, **caractérisé en ce que** dans le cadre de l'étape c), au moins un paramètre supplémentaire du groupe d'informations sur le rinçage synchronisé d'au moins une autre section de conduit sélectionnée du même réseau d'eau, la température de l'eau dans la section de conduit sélectionnée, la qualité de l'eau dans la section de conduit sélectionnée, les informations sur le déroulement et la réussite des rinçages précédents sont utilisées pour mettre à jour le plan de rinçage.

4. Procédé selon l'une des revendications 1 à 3, **caractérisé en ce que** dans le cadre de l'étape (d), la valeur instantanée de la pression dans les conduits est mesurée avec une fréquence de l'ordre des dizaines de Hz, tandis qu'à l'étape e) la valeur instantanée de la pression dans les conduits est mesurée avec une fréquence de l'ordre d'unités de kHz.

5. Procédé selon l'une des revendications 1 à 4, **caractérisé en ce que** dans le cadre de l'étape (b) de procédé, le rinçage à l'eau n'est pas commencé lorsque les limites de pression admissibles sont dépassées.

6. Dispositif mobile pour le rinçage en toute sécurité des conduits du réseau d'approvisionnement en eau selon l'une quelconque des revendications 1 à 5 est constitué d'une bride (1) d'entrée avec adaptateur (2) pour raccorder l'alimentation en eau provenant de la bouche d'incendie du réseau d'eau, d'un tuyau (3) de tranquillisation relié à une extrémité à la bride (1) d'entrée, d'une soupape (4) de sécurité disposée à l'autre extrémité du tuyau (3) de tranquillisation, et d'au moins un moyen de commande pour commander le fonctionnement du dispositif mobile, **caractérisé en ce que** le dispositif mobile est également constitué d'une vanne (6) à commande électrique, d'au moins un appareil de mesure électrique pour mesurer les paramètres physiques ou de qualité de l'eau, au moins un appareil de mesure électrique est connecté au tuyau (3) de tranquillisation et est constitué d'au moins un manomètre (10) électrique, d'un débitmètre (5) électrique disposé en aval de la soupape (4) de sécurité dans le sens de l'écoulement de l'eau, d'une bride (7) de sortie avec un adaptateur (2) disposé sur la vanne (6) à commande électrique pour raccorder la sortie d'eau du dispositif mobile, d'une unité (8) de commande électronique connectée par fil ou sans fil à au moins un appareil de mesure pour mesurer les paramètres physiques ou de qualité de l'eau, au débitmètre (5) électrique, à la vanne (6) à commande électrique et au moyen de commande, les composants du dispositif mobile étant logés dans un chariot couvert pour leur capotage de sécurité et pour la transportabilité du dispositif mobile, et **en ce que** la vanne (6) à commande électrique est disposée en aval du débitmètre (5) électrique dans le sens de l'écoulement de l'eau, le dispositif mobile étant configuré pour mesurer le niveau d'eau dans le tuyau de la section de conduit sélectionnée et pour évaluer le niveau d'eau et réguler le débit en conséquence par la commande de la vanne (6) à commande électrique.

7. Dispositif mobile selon la revendication 6, **caractérisé en ce que** le tuyau (3) de tranquillisation est pourvu d'une sortie permettant de raccorder un tuyau (9) de soutirage équipé d'un robinet (18) et d'au moins un appareil de mesure électrique pour mesurer les paramètres physiques ou de qualité de l'eau.

8. Dispositif mobile selon la revendication 6 ou 7, **caractérisé en ce qu'**au moins un appareil de mesure électrique pour mesurer les paramètres physiques ou de qualité de l'eau fait partie du groupe constitué d'un thermomètre (11) et d'un turbidimètre (12).

9. Dispositif mobile selon l'une des revendications 6 à 8, **caractérisé en ce que** les moyens de mesure de l'appareil de mesure électrique pour mesurer les paramètres physiques ou de qualité de l'eau est situé à l'extérieur de la section transversale principale du tuyau (9) de soutirage pour l'écoulement de l'eau.

10. Dispositif mobile selon l'une des revendications 6 à 9, **caractérisé en ce que** la vanne (6) à commande électrique présente une vitesse de variation régulable du débit d'eau qui la traverse.

11. Dispositif mobile selon l'une des revendications 6 à 10, **caractérisé en ce que** l'unité (8) électronique de commande est dotée d'une interface de communication pour la communication sans fil avec un serveur distant ou un autre dispositif mobile pour un rinçage synchronisé des conduits du réseau d'eau ou avec un dispositif électronique externe.

12. Dispositif mobile selon l'une des revendications 6 à 11, **caractérisé en ce que** l'unité (8) de commande électronique est équipée d'un localisateur pour déterminer une position cartographique précise.

13. Dispositif mobile selon l'une des revendications 6 à 12, **caractérisé en ce que** le chariot est constitué d'un cadre rigide avec un carénage (17) et des roues (16), le moyen de commande et les brides (1, 7) d'entrée et de sortie s'étendent à l'extérieur du carénage (17).

14. Dispositif mobile selon l'une des revendications 6 à 13, **caractérisé en ce qu'il comprend** une source de charge et d'alimentation constitué d'au moins un accumulateur (13) d'une tension de 12 V.

15. Dispositif mobile selon l'une des revendications 6 à 14, **caractérisé en ce que** le moyen de commande est constitué d'un écran (14) et d'au moins un bouton-poussoir (15).
